# EUROPÄISCHE PATENTSCHRIFT

(11) **EP 1 097 437 B1**
(45) Veröffentlichungstag und Bekanntmachung des Hinweises auf die Patenterteilung: **20.11.2002**
(21) Anmeldenummer: 99932878.4
(22) Anmeldetag: 13.07.1999
(51) Int. Cl.: G07F 7/10

(54) **SYSTEM UND VERFAHREN ZUR ABWICKLUNG DES BARGELDVERKEHRS MIT KUNDEN INNERHALB VON GELDINSTITUTEN**
SYSTEM AND METHOD FOR CONTROLLING CASH TRANSACTIONS WITH CUSTOMERS WITHIN BANKING INSTITUTES
SYSTEME ET METHODE DE DEROULEMENT DES TRANSACTIONS EN ESPECES AVEC DES CLIENTS AU SEIN D'INSTITUTS BANCAIRES

(30) Priorität: 13.07.1998 DE 19831360; 24.08.1998 DE 19838437
(43) Veröffentlichungstag der Anmeldung: 09.05.2001
(73) Patentinhaber: synfis Service GmbH, 30916 Isernhagen (DE)
(72) Erfinder: Eberhardt, Karl-Heinz, 82396 Pähl (DE)
(74) Vertreter: Cohausz & Florack
(86) Internationale Anmeldenummer: EP9904948
(87) Internationale Veröffentlichungsnummer: WO00004514

(56) Entgegenhaltungen:
- EP-A- 0 779 601
- FR-A- 2 592 197
- US-A- 3 938 091

## Beschreibung

Die Erfindung betrifft ein System und ein Verfahren zur Abwicklung des Bargeldverkehrs mit Kunden innerhalb von Geldinstituten, ihren Geschäftsstellen und dergleichen.

Es ist allgemein bekannt, daß in Geldinstituten für den Bargeldverkehr mit Kunden einerseits offene Kundenschalter mit von Mitarbeitern des Geldinstitutes besetzten Arbeitsplätzen und andererseits Kassenschalter zur Verfügung stehen, in denen der Kassier einen Arbeitsplatz zur Verfügung hat, der entsprechend den Bestimmungen der Berufsgenossenschaften mit einer Panzer-Vollverglasung und einem geeigneten Schließsystem versehen ist. Ist ein Geschäftsvorgang am Kundenschalter abgewickelt, so kann dort dem Kunden eine mit einer Platzkarte vergleichbare Kassenschalternummmer ausgehändigt werden, welche sich auch auf einem vom Kundenschalter an den Kassenschalter weitergereichten Beleg wiederfindet. Der sich am Kassenschalter meldende Kunde erhält dann belegentsprechend nach Vorweisen seiner Kassenschaltemummer eine Bargeldauszahlung.

Im Servicebereich von Hauptstellen und größeren Geschäftsstellen von Geldinstituten wurde in den letzten Jahren der Bargeldverkehr mit dem Kunden auf automatische Kassentresore verlagert, welche in oder nahe den Kundenschaltern installiert wurden und einen beträchtlichen apparativen Aufwand verursachten.

In Kleingeschäftsstellen und Kleinstgeschäftsstellen erzwingen die einschlägigen Unfallverhütungsvorschriften sowie die Richtlinien von ZKA und den Berufsgenossenschaften eine Sicherheits-Vollverglasung für den Kassenschalter, welche aufwendige Investitionen bedingt und servicefeindlich ist.
Bewährt hat sich in den letzten Jahren der in der Nähe von Geldinstituten oder ihren Geschäftsstellen oder auch innerhalb der Geschäftsräume der Geldinstitute aufgestellte Geldautomat, der durch Informationseingabe von einem Kunden zugeordneten Scheckkarten und von einer kundenbedienten Tastatur sowie von einem Datennetz und/oder von Datenverarbeitungseinrichtungen des Geldinstitutes gesteuert wird und eine Bargeldausgabe entsprechend einem von Kunden eingegebenen Betrag innerhalb eines Limits vornimmt.

Durch die Erfindung soll die Aufgabe gelöst werden, ein System zur Abwicklung des Bargeldverkehrs mit Kunden innerhalb von Geldinstituten, ihren Geschäftsstellen und dergleichen so auszubilden, daß mit vergleichsweise geringem apparativen Aufwand der Bargeldverkehr unter Verzicht auf mit Vollverglasung versehenen Kassenschaltern abgewickelt werden kann, ohne daß dem Kunden besondere Kenntnisse und Fertigkeiten für diese Abwicklung vermittelt werden müssen. Es soll sich ein Rationalisierungs- und Einsparungseffekt durch Mehrfachnutzung von im allgemeinen bereits vorhandenen Einrichtungen ergeben.

Diese Aufgabe wird erfindungsgemäß durch die im anliegenden Anspruch 1 angegebenen Merkmale gelöst.

Vorteilhafte Ausgestaltungen und Weiterbildungen sind Gegenstand der dem Anspruch 1 nachgeordneten Ansprüche, deren Inhalt zum Gegenstand der vorliegenden Beschreibung gemacht wird, ohne an dieser Stelle den Wortlaut im einzelnen zu wiederholen.

Als besonders vorteilhaft ist zu erwähnen, daß Systeme der hier angegebenen Art auch unter Einbeziehung bereits in Geldinstituten vorhandener Geldautomaten unter vergleichsweise geringfügiger Ergänzung ihrer apparativen Ausrüstung aufgebaut werden können.

Von einem Mitarbeiter des Geldinstituts besetzte Kassenschalter und deren Panzer-Vollverglasung können in Wegfall kommen. Ein oft schon vorhandener Geldautomat wird gemäß den hier angegebenen Prinzipien einer weiteren Nutzbarkeit zugänglich.

Größere Selbstbedienungsfoyers können in Verbindung mit in geringem Abstand davon aufgestellten Geldautomaten als Kleinstzweigstelle länger geöffnet bleiben und entsprechen dennoch in vollem Umfang den einschlägigen Unfallverhütungsvorschriften und den Forderungen von ZKA und von Berufsgenossenschaften.

Nachfolgend werden Ausführungsbeispiele unter Bezugnahme auf die Zeichnung näher erläutert. Es zeigen:
Fig. 1 eine schematische, stark vereinfachte Darstellung eines Geldautomatensystems bekannter Art, wobei diese Abbildung auch zur Festlegung der Begriffe dient;
Fig. 2 ein schematisiertes und zur Erhöhung der Übersichtlichkeit vereinfachtes Schaltbild eines Systems der hier angegebenen Art, die Anwendung auf Kleingeschäftsstellen betreffend,
Fig. 3 ein Flußdiagramm eines Geschäftsvorganges im System nach Fig. 2,
Fig. 4 ein schematisches und zur Erhöhung der Übersichtlichkeit vereinfachtes Schaltbild eines weiteren Ausführungsbeispiels eines Systems der hier angegebenen Art, wobei ein Vergleich der Kundenidentifizierung am Orte eines Servers stattfindet;
Fig. 5 eine schematische, vereinfachte Darstellung eines Systems gemäß einer anderen Ausführungsform, wobei der Vergleich von Kundenidentifizierungen an einem mitarbeiterbesetzten Arbeitsplatz stattfindet;
Fig. 6 eine schematische, vereinfachte Darstellung eines Systems gemäß einer wiederum anderen Ausführungsform, bei welcher ein Vergleich von Kundenidentifizierungen am Orte eines Bargeld-Zahlungsvorgangs-Durchführungsplatzes, insbesondere eines Geldautomaten, stattfindet; und
Fig. 7 ein schematisches, vereinfachtes Schaltbild eines Systems der hier angegebenen Art gemäß einem Ausführungsbeispiel, bei welchem eine Umschaltung des Datenverkehrs eines Geldautomaten mit einem Server vom unmittelbaren Datenaustausch auf den Datenaustausch über einen mitbarbeiterbesetzten Arbeitsplatz stattfindet.

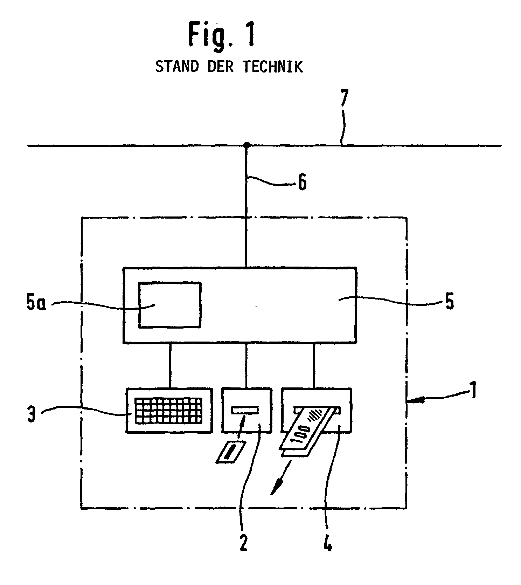

In Fig. 1 ist durch eine strichpunktierte Umgrenzung ein herkömmlicher Geldautomat angedeutet. Dieser Geldautomat ist in oder nahe einem Geldinstitut, einer Geschäftsstelle oder einem anderen frequentierten Ort, beispielsweise einem Bahnhof oder einem Supermarkt, aufgestellt. Der Geldautomat enthält eine Kundenidentifizierungseinrichtung, in welche vom Kunden eine mit einem Magnetbandstreifen versehene Scheckkarte eingeschoben wird, welche einen dem betreffenden Kunden zugeordneten Informationsträger bildet, wobei die den Kunden identifizierende Information beispielsweise ein auf dem Informationsträger gespeichertes Codewort ist, das zu einer dem Kunden ausschließlich persönlich bekannten Geheimnummer in einer gewissen Beziehung steht. Es sei hier angemerkt, daß die vorstehend als Kundenidentifizierungseinrichtung bezeichnete Baueinheit im eigentlichen Sinne dem Stande der Technik gemäß lediglich eine Scheckkartenidentifizierungseinrichtung ist.

Der Geldautomat 1 enthält außerdem als Eingabestelle eine Tastatur 3. An dieser Tastatur gibt der Kunde seine Geheimnummer ein und beschreibt einen gewünschten Bargeld-Zahlungsvorgang, indem er an der Tastatur den gewünschten Auszahlungsbetrag eintippt.

Desferneren enthält der Geldautomat 1 eine Bargeld-Ausgabevorrichtung 4, die im allgemeinen bei ordnungsgemäßem Bargeld-Zahlungsvorgang Geldscheine in einer Stückelung entsprechend dem gewünschten eingetippten Betrag ausgibt. Weiter befindet sich innerhalb des Geldautomaten 1 eine Einrichtung 5 zur Steuerung der Bargeld-Ausgabevorrichtung 4 in Abhängigkeit von durch die Kundenidentifizierungseinrichtung 2, durch die Eingabestelle 3 und durch von einer Datenquelle erzeugten bzw. bereitgestellten Eingangssignalen. Die Einrichtung 5 kann als Datenverarbeitungseinrichtung im weiteren Sinne bezeichnet werden und ist bei dem in Fig. 1 skizzierten Beispiel eines Geldautomaten nach dem Stande der Technik über eine Datenleitung 6 mit einem hausintemen Datennetz 7 verbunden, das wiederum mit einer allgemein als Server bezeichneten Datenverarbeitungseinrichtung des betreffenden Geldinstituts oder mit mehreren solchen Datenverarbeitungseinrichtungen Verbindung hat.

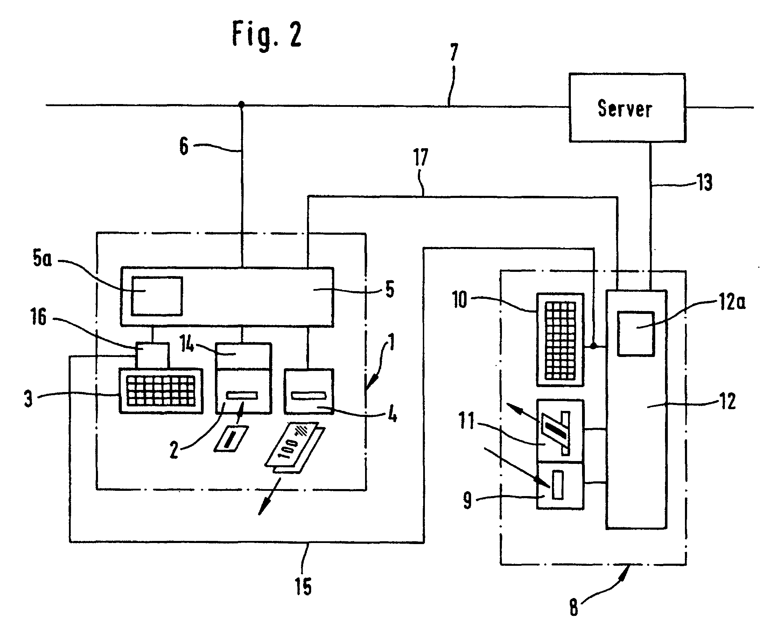

Die bisher beschriebenen Teile eines Geldautomaten herkömmlicher Art können sich auch in einem System der hier angegebenen Art wiederfinden. Demgemäß sind in Fig. 2 für solche Teile auch entsprechende Bezugszeichen verwendet.

Außer dem Geldautomaten 1 enthält das System zur Abwicklung des Bargeldverkehrs mit Kunden der hier angegebenen Konzeption einen von einem Mitarbeiter des betreffenden Geldinstitutes besetzten Arbeitsplatz 8. An diesem Arbeitsplatz befindet sich bei dem vorliegenden Ausführungsbeispiel, welches Kleingeschäftsstellen betrifft, eine gesonderte Kundenidentifizierungseinrichtung 9 in Gestalt einer Kennworteingabevorrichtung. Die Kundenidentifizierungseinrichtung 9 kann auch durch einen Fingerprintabtaster oder durch einen Unterschriftenscanner oder durch einen Stimmanalysator gebildet sein. Auch nach anderen biometrischen Verfahren arbeitende Einrichtungen 9 können hier verwendet werden.

Weiter befindet sich am Orte des Arbeitsplatzes 8 eine Eingabetastatur 10 ähnlich der Eingabetastatur 3 des Geldautomaten 1. An der Eingabestelle mit der Tastatur 10 nimmt der Mitarbeiter des Geldinstitutes die Kennzeichnung des Kunden, beispielsweise die Namenseingabe, die Eingabe der Geschäftsnummer und die für die Buchung erforderliche Beschreibung des Bargeld-Zahlungsvorganges vor.

Ein sehr wichtiger Teil des Arbeitsplatzes 8 ist ein Informationsträger-Beschriftungsgerät 11, etwa in Gestalt eines Magnetkarten-Beschriftungsgerätes zum Erstellen kundenzugeordneter Informationsträger.

Die Tastatur 10 und das Informationsträger-Beschriftungsgerät 11 sind mit einer der Datenverarbeitungseinrichtung 12 verbunden, die sich am Orte des Arbeitsplatzes 8 befindet und über eine Datenleitung 13 Verbindung zu dem Datennetz und zu der als Server bezeichneten Datenverarbeitungseinrichtung hat.

Bildschirme der Datenverarbeitungseinrichtungen 5 bzw. 12 sind bei 5a bzw. 12a angedeutet.

Der Ablauf eines Bargeld-Zahlungsvorganges (in dem gewählten Beispiel einer Kleingeschäftsstelle) aus der Sicht des Kunden ist nun folgender:

Zunächst begibt sich der Kunde zu dem Kundenschalter, welcher mit dem Arbeitsplatz 8 ausgerüstet ist. Dort gibt der Mitarbeiter des Geldinstitutes an der Tastatur 10 beispielsweise den Namen des Kunden, eine Geschäftsnummer und die Einzelheiten des Bargeld-Zahlungsvorganges, insbesondere die Kontonummer des Kunden und den auszuzahlenden Betrag ein. Der Kunde identifiziert sich durch seine Unterschrift, durch Eingabe eines Geheimwortes oder dergleichen an der Kundenidentifizierungseinrichtung 9 oder in Abwandlung hiervon durch eine zusätzliche, für den Mitarbeiter des Geldinstitutes nicht einsehbare Eingabe an der Tastatur 10.

Nun erhält der Kunde bei dem vorliegenden Ausführungsbeispiel aus dem Informationsträger-Beschriftungsgerät 11 eine Magnetkarte.

Mit dieser Magnetkarte begibt sich der Kunde zu dem Geldautomaten 1 und führt die Magnetkarte in die Kundenidentifizierungseinrichtung 2 ein. Eine zusätzliche Tastatureingabe an der Tastatur 3 braucht der Kunde nicht vorzunehmen, da die Bargeld-Ausgabevorrichtung 4 abweichend von der herkömmlichen Wirkungsweise des Geldautomaten 1 allein durch die Magnetkarteneingabe an der Kundenidentifizierungseinrichtung 2 ausgelöst wird, vorausgesetzt, daß die betreffende Magnetkarte aus dem Magnetkarten-Beschriftungsgerät 11 des Arbeitsplatzes 8 stammt und als eine solche Karte von der Einrichtung 2 aufgrund besonderer Kennzeichnung erkannt wird.

Nach Auszahlung des gewünschten Bargeldbetrages an der Bargeld-Ausgabevorrichtung 4 erhält der Kunde von der Kundenidentifizierungseinrichtung 2 in dem hier angegebenen Beispiel die Magnetkarte gelöscht und vom Geldautomaten 1 einbehalten. Zu diesem Zwecke ist der Kundenidentifizierungseinrichtung 2 des Geldautomaten 1 bei der Ausführungsform nach Fig. 2 eine Kartenlöscheinrichtung 14 zugeordnet.

Im einzelnen bereitet der Mitarbeiter des betreffenden Geldinstitutes nach Vorsprache des Kunden am Orte des Arbeitsplatzes 8 an der Tastatur 10 im Dialog mit der Einrichtung 12 unter Zuhilfenahme der darin gespeicherten Informationen oder der über die Datenleitung 13 von dem Netz 7 bezogenen Informationen den Bargeldauszahlungsvorgang vor und veranlaßt die Übertragung entsprechender Steuerbefehle auf die Einrichtung 5 des Geldautomaten 1 entweder über die Datenleitung 13, das Netz 7 und die Datenleitung 6 oder durch eine unmittelbar von der Einrichtung 12 des Arbeitsplatzes 8 zur Einrichtung 5 des Geldautomaten 1 geführte Datenleitung 17.

Gemäß einer abgewandelten Ausführungsform kann die Vorbereitung der Auszahlung im Geldautomaten 1 vom Mitarbeiter des Geldinstitutes vom Arbeitsplatz 8 auch dadurch vorgenommen werden, daß die Tastatur 10 über einen gesonderten Steuersignalkanal 15 und einen Umschalter 16 die Einrichtung 5 anstelle der Tastatur 3 steuert.

Bedeutsam ist, daß auf dem von dem Informationsträger-Beschriftungsgerät 11 ausgegebenen Informationsträger letztlich nur Daten gespeichert sind, welche in keiner Weise den betreffenden Bargeld-Auszahlungsvorgang beschreiben, sondern den Geldautomaten 1 dann und nur dann zu einer Auszahlung veranlassen, wenn der Geldautomat 1 von dem Arbeitsplatz 8 durch den Mitarbeiter des betreffenden Geldinstitutes gleichsam hausintern zur Auszahlung vorbereitet worden ist. Der Geldautomat 1 ist hierzu über Datenübertragungswege, oft als sogenannter token ring bezeichnet, mit dem Server und dem Arbeitsplatz 8 gekoppelt. Hierdurch wird der erforderliche Schutz gegen Manipulationen erreicht.

Ein zusätzlicher Manipulations- und Fälschungsschutz ergibt sich dadurch, daß durch geeignete Fühler und Signalgeber am Informationsträger-Beschriftungsgerät 11 des Arbeitsplatzes 8 bei Ausgabe des Informationsträgers an den Kunden ein Bestätigungssignal erzeugt wird, welches von dem Arbeitsplatz 8 beispielsweise über die Datenleitung 13, das Netz 7 und die Datenleitung 6 an den Geldautomaten 1 übertragen wird und in diesem ein Zeitfenster öffnet, welches nach einer bestimmten, einstellbaren Zeit wieder geschlossen wird. Nur innerhalb dieses Zeitfensters erwartet und bewirkt die Einrichtung 5 bei Empfang gerade des hier betroffenen Informationsträgers an der Kundenidentifizierungseinrichtung 2 die

Bargeldausgabe an der Ausgabevorrichtung 4. Durch Verknüpfung eines Informationsteiles der Information auf dem Informationsträger mit Zeitsteuersignalen zu einer von der Einrichtung 12 zur Einrichtung 5 zu übertragenden Signalgruppe kann erreicht werden, daß gestaffelte Zeitfenster individuell für nacheinander den Geldautomaten 1 nach Besuch des Kundenschalters benutzende Kunden geöffnet werden.

Ferner ist durch Kennzeichnung der vom Arbeitsplatz 8 ausgegebenen Informationsträger dafür Sorge getragen, daß solche Informationsträger den Geldautomaten 1 ohne Bedienung der Tastatur 3 in Betrieb setzen, während der Geldautomat 1 für die übliche Bargeldentnahme mit Scheckkarte unter Einsatz auch der Tastatur 3 verwendbar bleibt. Hierzu ist in der Kundenidentifizierungseinrichtung 2 ein entsprechender, Umschaltvorgänge im Geldautomaten 1 auslösender Kartenfühler vorgesehen.

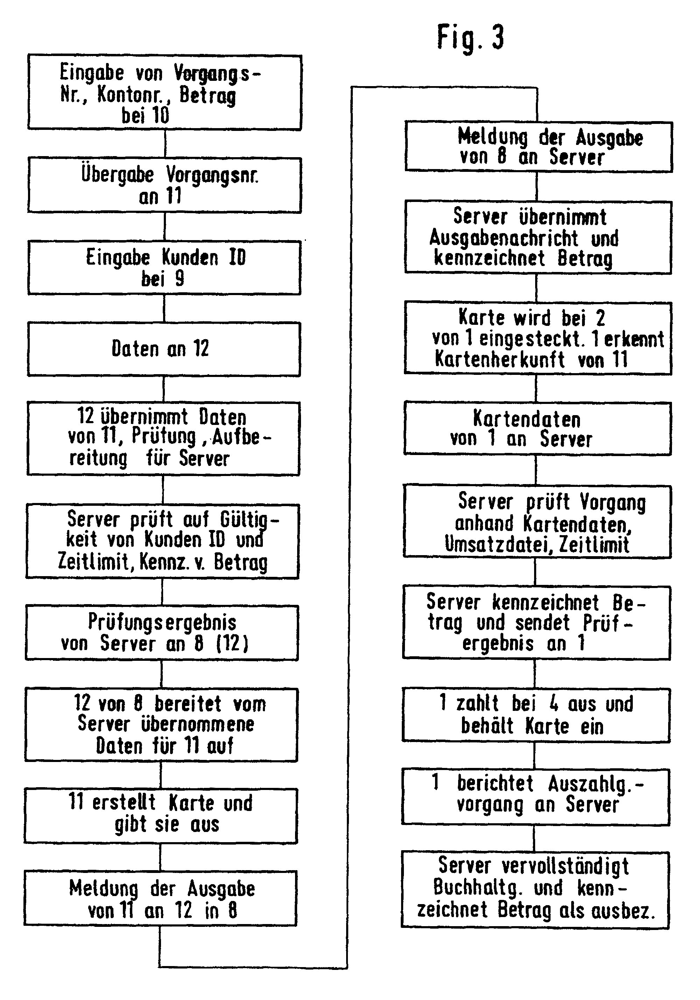

Das Flußdiagramm von Figur 3 zeigt ein Beispiel für eine Folge von Schritten eines Geschäftsvorganges in einem gemäß Figur 2 aufgebauten System.

Die Daten des Geschäftsvorganges werden über die Tastatur 10 durch den Mitarbeiter des Geldinstitutes eingegeben, wobei diese Daten die Nummer des Vorganges, die Kontonummer des Kunden und den auszuzahlenden Betrag umfassen. Im nächsten Schritt wird die Nummer des Geschäftsvorganges an das Magnetkarten-Beschriftungsgerät 11 übergeben.

Handelt es sich um ein System für eine Kleinstgeschäftsstelle, so erfolgt nun auf entsprechende Aufforderung des Mitarbeiters des Geldinstitutes hin die Kundenidentifizierung auf elektronischem Wege an dem Gerät 9.

Die Eingabedaten des Geschäftsvorganges, die Kennwortdaten und Daten von dem Magnetkarten-Beschriftungsgerät 10 stehen im nächsten Schritt in der Einrichtung 12 zur Verfügung. Sie werden dort aufbereitet und zum Server übertragen.

Im Server erfolgt die Überprüfung auf das gültige Kennwort und die Prüfung auf vorgegebene Zeitgrenzen sowie die Kennzeichnung des Geldbetrages.

Das Prüfungsergebnis wird zum Arbeitsplatz 8 übertragen.

Der Arbeitsplatz 8 übernimmt wiederum sämtliche Daten vom Server und bereitet sie für das Magnetkarten-Beschriftungsgerät 11 vor, welches die Magnetkarte beschriftet und sie ausgibt und diese Ausgabe an die Einrichtung 12 des Arbeitsplatzes 8 meldet, die ihrerseits die Kartenausgabe an den Server berichtet.

Im nächsten Schritt kennzeichnet der Server nach Empfang der Nachricht über die Kartenausgabe den auszuzahlenden Betrag.

Der Kunde oder der Mitarbeiter des Geldinstitutes steckt die vom Magnetkarten-Beschriftungsgerät beschriftete Magnetkarte in die Einrichtung 2 des Geldautomaten 1.

Die Einrichtung 2 erkennt, daß es sich bei der eingesteckten Magnetkarte um eine von dem Magnetkarten-Beschriftungsgerät 11 erstellte Karte handelt und liest den Informationsinhalt der Karte.

Dann sendet der Geldautomat 1 den abgelesenen Informationsinhalt zum Server, wo der Geschäftsvorgang anhand der abgelesenen Information der Magnetkarte, der Umsatzdatei und eingegebener Zeitgrenzen auf Gültigkeit überprüft wird.

Der Server kennzeichnet den auszuzahlenden Geldbetrag und sendet die Information über das Prüfungsergebnis an den Geldautomaten 1.

Dieser zahlt bei positivem Prüfungsergebnis aus und bewirkt Einbehaltung der Karte, insbesondere aber zunächst deren Löschung.

Der Geldautomat 1 berichtet schließlich über den Verlauf der Auszahlung an den Server, in welchem die Buchung der Auszahlung vorgenommen und der ausgezahlte Betrag gekennzeichnet wird.

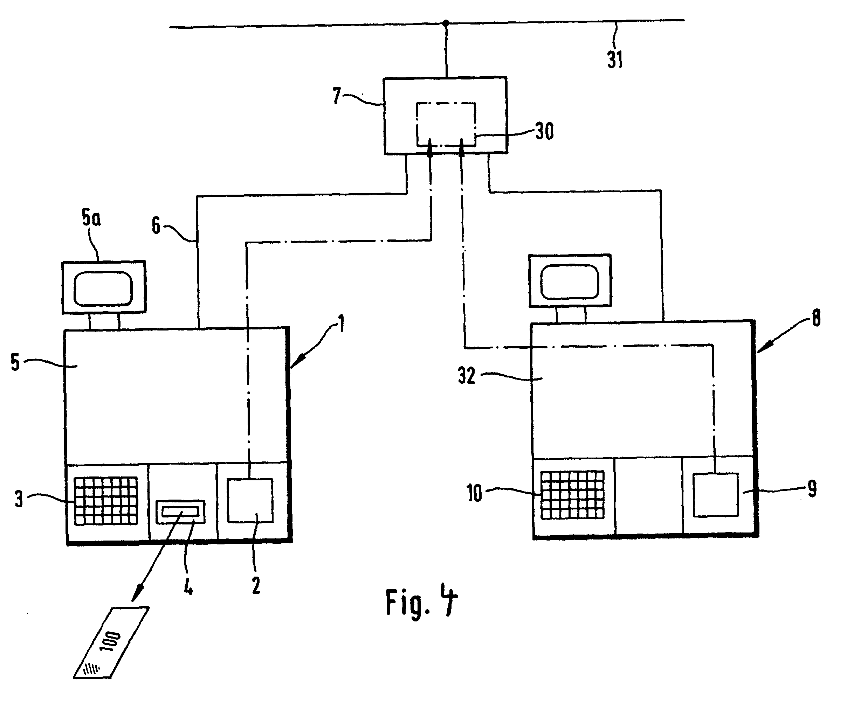

Außer dem Geldautomaten 1 enthält auch das System zur Abwicklung des Bargeldverkehrs mit Kunden der hier angegebenen Konzeption gemäß Fig. 4 einen von einem Mitarbeiter des betreffenden Geldinstitutes besetzten Arbeitsplatz 8.

Während in den Figuren 4 bis 7 ein einziger mitarbeiterbesetzter Arbeitsplatz 8 und ein zugehöriger Bargeld-Zahlungsvorgangs-Durchführungsplatz 1, insbesondere ein Geldautomat 1, dargestellt sind, versteht es sich, daß die vorliegenden Ausführungen und auch die anliegenden Ansprüche ebenso auf Systeme zu beziehen sind, bei denen mehrere mitarbeiterbesetzte Arbeitsplätze einem Bargeld-Zahlungsvorgangs-Durchführungsplatz oder Geldautomaten zugeordnet sind.

Das System nach Fig. 4 enthält ebenso wie der anhand von Fig. 1 beschriebene Geldautomat eine Kundenidentifizierungseinrichtung 2 am Orte des Bargeld-Zahlungsvorgangs-Durchführungsplatzes 1, wobei aber diese erste Kundenidentifizierungseinrichtung 2 von derjenigen eines herkömmlichen Geldautomaten, nämlich von einer herkömmlichen Leseeinrichtung oder Abtasteinrichtung für eine eingeschobene Scheckkarte, dadurch abweicht, daß sie nicht nur eine solche herkömmliche Abtastung oder Ablesung einer gültigen Kundenscheckkarte vorzunehmen in der Lage ist, sondern auch durch Ausbleiben einer bestimmten Information oder durch Hinzukommen einer gesonderten Information in der Weise umschaltbar ist, daß der in Fig. 4 gezeigte Bargeld-Zahlungsvorgangs-Durchführungsplatz 1 von dem normalen Geldautomatenbetrieb in einen individuellen, einem bestimmten Kunden des Arbeitsplatzes 8 gewidmeten Betrieb übergeht.

Die erste Kundenidentifizierungseinrichtung 2 enthält also die herkömmlichen Abtastmittel eines Geldautomaten zur Abwicklung des regulären Geldautomatenbetriebes, bei dem die Kundenscheckkarten und die Eingabe von Geheimnummern den Betrieb bestimmen und zusätzlich Abtastmittel zur Aufnahme kundenspezifischer Informationen zur Abwicklung des Bargeldverkehrs entsprechend der hier angegebenen Gedanken. Eine derartige Kundenidentifizierungseinrichtung 2 nimmt kundenspezifische Informationen für eine einmalige Abwicklung des Bargeldverkehrs mit dem betreffenden Kunden auf und kann eine Kennworteingabevorrichtung oder einen Fingerprintabtaster oder einen Unterschriftenscanner oder einen Stimmanalysator oder eine nach anderen biometrischen Verfahren arbeitende Einrichtung enthalten. Die genannte erste Kundenidentifizierungseinrichtung 2 kann auf Abtasteinrichtungen zum Lesen einer regulären Scheckkarte verzichten, wenn das hier angegebene System nicht darauf abgestimmt ist, mit einem herkömmlichen Geldautomaten ausgerüstet zu sein.

Am Orte des mitarbeiterbesetzten Arbeitsplatzes 8 befindet sich in Analogie zu den Verhältnissen an dem Bargeld-Zahlungsvorgangs-Durchführungsplatz eine Eingabetastatur 10 und eine zweite Kundenidentifizierungseinrichtung 9, welchletztere ebenso wie die erste Kundenidentifizierungseinrichtung 2 zur Aufnahme kundenspezifischer Informationen ausgebildet ist und von einer Kennworteingabevorrichtung oder einem Fingerprintabtaster oder einem Unterschriftenscanner oder einem Stimmanalysator oder einer Einrichtung verwirklicht werden kann, welche nach einem anderen biometrischen Verfahren arbeitet. Jedenfalls stimmt das Identifizierungsverfahren in der ersten Kundenidentifizierungseinrichtung 2 mit dem entsprechenden Verfahren in der Kundenidentifizierungseinrichtung 9 überein.

Die Identifizierungsergebnisse werden bei der Ausführungsform nach Fig. 4 über gesonderte Signalleitungen (in Fig. 4 als strichpunktierte Linien gezeichnet) einem Vergleicher 30 innerhalb einer Datenverarbeitungseinrichtung oder innerhalb des Servers 7 zugeleitet.

Der Vergleicher 30 prüft, ob die in der ersten Kundenidentifizierungseinrichtung 2 eingegebene kundenspezifische Information und die in der zweiten Kundenidentifizierungseinrichtung 9 des Arbeitsplatzes 8 eingegebene kundenspezifische Information miteinander identisch sind. Nur in diesem Falle wird an dem Bargeld-Zahlungsvorgangs-Durchführungsplatz 1 die Bargeld-Ausgabevorrichtung 4 nach Vorbereitung des Auszahlungsvorganges vom Arbeitsplatz 8 aus unter Mitwirkung der Datenverarbeitungseinrichtung 7 für einen vorbereiteten Auszahlungsvorgang freigegeben.

Bei der in Fig. 4 schematisch dargestellten Ausführungsform des hier angegebenen Systems ist es also nicht erforderlich, daß ein kundenidentifizierender Informationsträger am Arbeitsplatz 8 erstellt und am Bargeld-Zahlungsvorgangs-Durchführungsplatz 1 gelesen, einbehalten und/oder gelöscht wird. Vielmehr ist es bei dem System nach Fig. 4 möglich, ein und denselben kundenspezifischen Informationsträger sowohl der Einrichtung 9, als auch danach der Einrichtung 2 vorzulegen, um dann bei einem erfolgreichen Vergleich in der Vergleichseinrichtung 30 vom Server 7 aus den Bargeld-Zahlungsvorgangs-Durchführungsplatz 1, insbesondere den Geldautomaten, einmalig für den betreffenden Kunden und zur Durchführung des betreffenden Zahlungsvorganges freizugeben, wonach der Kunde seinen für ihn eigentümlichen Informationsträger nach Benutzung an den Systemteilen 8 und 1 entweder vernichten oder weiterhin mitführen und für einen neuerlichen Gebrauch bereithalten kann, wobei allerdings für den neuerlichen Gebrauch wiederum eine Vorlage dieses Informationsträgers in der Kundenidentifizierungseinrichtung 9 des Arbeitsplatzes 8 und entsprechende Vorbereitungsarbeiten an der Eingabestelle 10 sowie über den Server 7 erforderlich sind.

In Fig. 4 sind die Kundenidentifizierungseinrichtungen 2 und 9 nur als Blocksymbole angegeben. Bei praktischen Ausführungsformen ist jedenfalls am Orte des Bargeld-Zahlungsvorgangs-Durchführungsplatzes oder des Geldautomaten 1 die Kundenidentifizierungseinrichtung sowohl für die Entgegennahme und Abtastung normaler Scheckkarten als auch zur Aufnahme anderer kundenspezifischer Informationen ausgebildet. Dies bedeutet, daß zumindest die Kundenidentifizierungseinrichtung 2 dann, wenn der Systembauteil 1 ein Geldautomat ist, sowohl eine herkömmliche Scheckkartenleseeinrichtung als auch beispielsweise eine Kennworteingabevorrichtung oder einen Fingerprintabtaster oder einen Unterschriftenscanner oder einen Stimmanalysator oder eine nach einem anderen biometrischen Verfahren arbeitende Einrichtung als Bestandteil der Kundenidentifizierungseinrichtung 2 enthält, nämlich einen ganz identischen Bestandteil, wie er entsprechend auch in der Kundenidentifizierungseinrichtung des Arbeitsplatzes 8 anzutreffen ist.

Die mindestens eine Datenverarbeitungseinrichtung, welche bei dem hier angegebenen System von einem positiven Vergleichsergebnis der Vergleichseinrichtung 30 von Fig. 4 im Sinne einer Freigabe der Bargeld-Ausgabevorrichtung 4 ihrerseits gesteuert ist, befindet sich bei der Ausführungsform nach Fig. 4 in dem Server 7, in welchem sich die Vergleichseinrichtung 30 selbst befindet. Der Server 7 kann, wie in Fig. 4 angedeutet, über eine hausinterne Datenleitung 31 oder über ein anderes Netzwerk mit einem übergeordneten Rechenwerk in Verbindung stehen. Dieses ist in den Zeichnungen zur Vereinfachung der Darstellung nicht gezeigt.

Die Datenverarbeitungseinrichtung, welche von einem positiven Vergleichsergebnis der Vergleichseinrichtung 30 im Sinne einer Freigabe der Bargeld-Ausgabevorrichtung 4 gesteuert ist, kann aber auch von der Datenverarbeitungseinrichtung 5 des Bargeld-Zahlungsvorgangs-Durchführungsplatzes bzw. Geldautomaten 1 gebildet sein oder läßt sich durch eine mit 32 bezeichnete Datenverarbeitungseinrichtung des mitarbeiterbesetzten Arbeitsplatzes 8 verwirklichen.

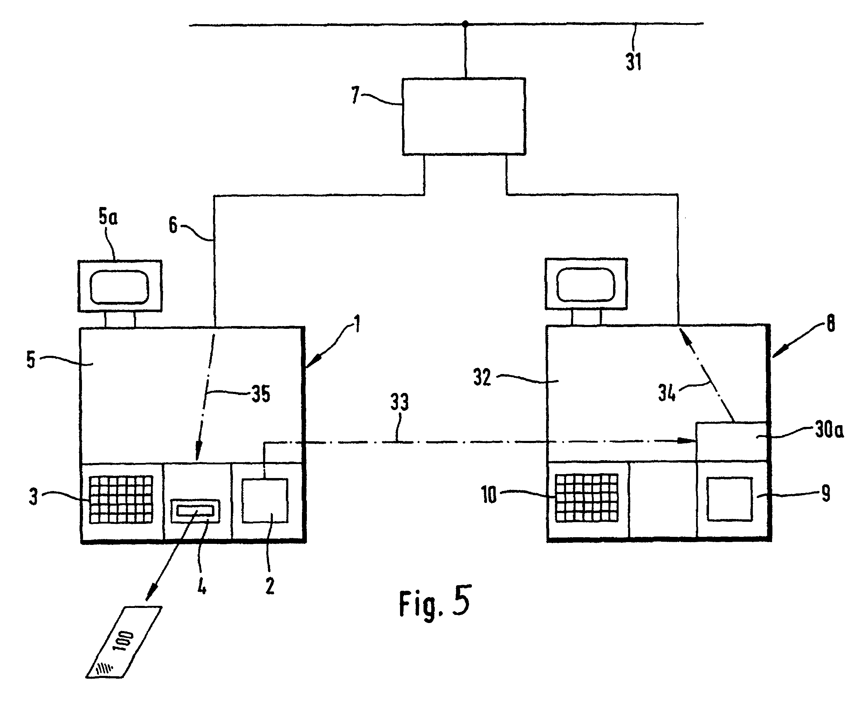

Fig. 5 zeigt eine abgewandelte Ausführungsform, bei der das Ergebnis der Aufnahme einer kundenspezifischen Information von der ersten Kundenidentifizierungseinrichtung 2 des Bargeld-Zahlungsvorgangs-Durchführungsplatzes oder Geldautomaten 1 über einen durch eine strichpunktierte Linie 33 angedeuteten Datenübertragungskanal zu einer Vergleichseinrichtung 30a des mitarbeiterbesetzten Arbeitsplatzes 8 übermittelt wird und dort, nämlich in der Vergleichseinrichtung 30a mit dem Ergebnis der Aufnahme einer kundenspezifischen Information von der zweiten Kundenidentifizierungseinrichtung 9 verglichen wird. Das Vergleichsergebnis kann dann, entweder automatisch oder durch entsprechende Eingabe des Mitarbeiters des Geldinstitutes veranlaßt, zu dem Server 7 übertragen werden und löst die Freigabe der Bargeld-Ausgabevorrichtung 4 am Bargeld-Zahlungsvorgangs-Durchführungsplatz bzw. Geldautomaten 1 aus. Dieser Vorgang ist in Fig. 5 durch die strichpunktierten Pfeile 34 und 35 angedeutet.

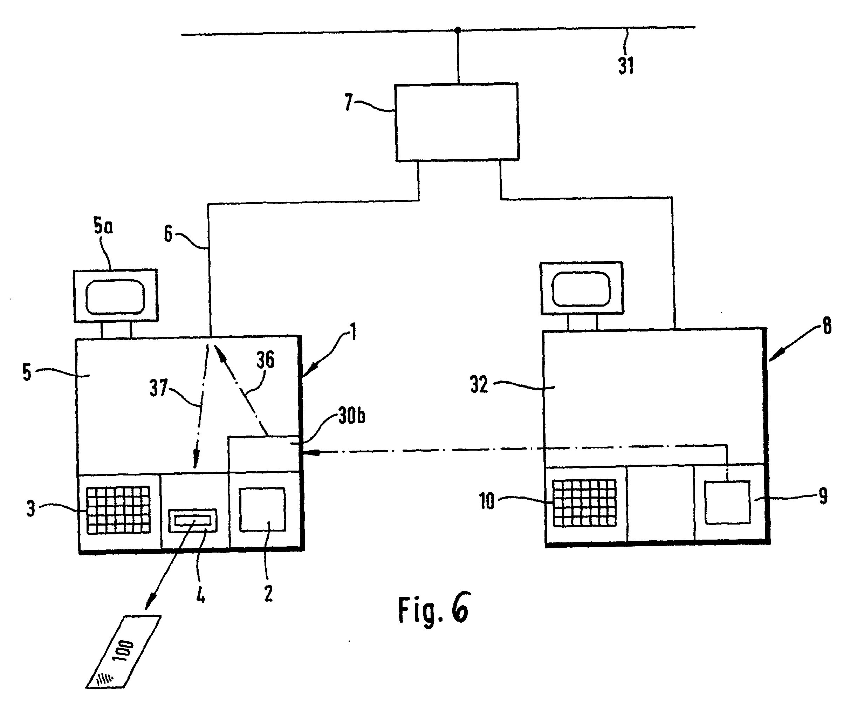

Fig. 6 zeigt eine Ausführungsform, bei der der Vergleich der Ergebnisse der Aufnahme kundenspezifischer Informationen in den Kundenidentifizierungseinrichtungen 2 und 9 nicht am Orte des mitarbeiterbesetzten Arbeitsplatzes 8, sondern am Orte des Bargeld-Zahlungsvorgangs-Durchführungsplatzes 1 in einer Vergleichseinrichtung 30b stattfindet. Diese meldet das Vergleichsergebnis über die Datenleitung an den Server 7, der dann wiederum bei einem positiven Vergleichsergebnis die Freigabe der Bargeld-Ausgabevorrichtung 4 bewirkt. Dieser Vorgang ist durch die strichpunktierten Pfeile 36 und 37 in Fig. 6 angedeutet.

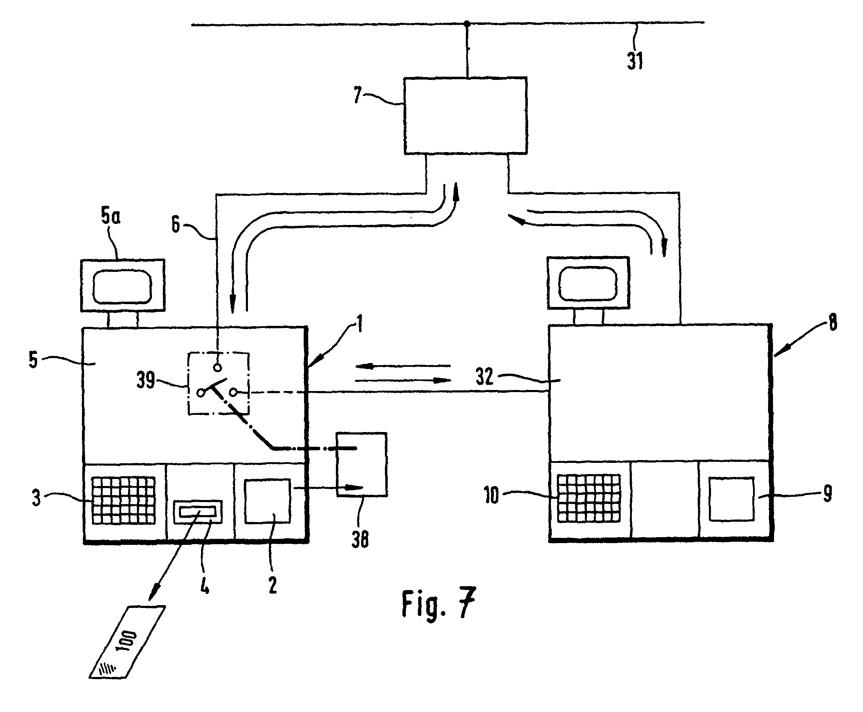

Die Ausführungsform nach Fig. 7 kann grundsätzlich den Aufbau der Ausführungsformen nach den Figuren 4 bis 6 haben. Bei der Ausführungsform nach Fig. 7 ist jedoch der Bargeld-Zahlungsvorgangs-Durchführungsplatz 1 jedenfalls ein herkömmlicher Geldautomat mit einer zur Verwirklichung des Systems der hier angegebenen Art vorgenommenen Abwandlung.

Im einzelnen ist der Kundenidentifizierungseinrichtung 2, also der sowohl die Abtastung regulärer Scheckkarten vornehmenden, als auch auf eine Kennworteingabe oder Fingerprinteingabe oder Unterschriftseingabe oder eine Stimmprobeeingabe oder eine andere biometrische Eingabe ansprechenden Einrichtung ein Detektor 38 zugeordnet, welcher über geeignete Steuersignalgeber einen Umschalter 39 betätigt, derart, daß immer dann, wenn der Detektor 38 die Eingabe einer regulären Scheckkarte für normale Bargeldentnahme aus dem Geldautomaten 1 feststellt, der Umschalter 39 die Datenverarbeitungseinrichtung 5 des Geldautomaten 1 mit dem Server 7 verbindet, so daß der normale, allgemein bekannte Betrieb eines Geldautomaten sichergestellt ist.

Sobald aber der Detektor 38 die Eingabe einer kundenspezifischen Information an der Kundenidentifizierungseinrichtung 2 feststellt, die von der Eingabe einer normalen Scheckkarte abweicht, bewirkt der Detektor 38 die Betätigung des Umschalters 39 derart, daß nun eine Verbindung zwischen dem Geldautomaten 1 und dem mitarbeiterbesetzten Arbeitsplatz 8 hergestellt wird, so daß jetzt die Aufnahmeergebnisse der Kundenidentifizierungseinrichtung 2 des Geldautomaten 1 und der Kundenidentifizierungseinrichtung 9 des mitarbeiterbesetzten Arbeitsplatzes 8 verglichen werden und je nach Vergleichsergebnis der Geldautomat 1 zur Freigabe der Bargeld-Ausgabevorrichtung 4 veranlaßt wird, und zwar entsprechend den Prinzipien, wie sie zuvor anhand der Figuren 4 bis 6 erläutert wurden.

Man erkennt, daß das hier angegebene System in der Weise ausgestaltet und eingesetzt werden kann, daß ein in herkömmlicher Weise benutzbarer Geldautomat auf einen von einem mitarbeiterbesetzten Arbeitsplatz direkt oder indirekt steuerbaren Individualbetrieb umstellbar ist, derart, daß beispielsweise Auszahlungen am Geldautomaten vorgenommen werden können, obwohl ein Kundenkonto bereits das Limit eines Dispositionskredits erreicht hat, beispielsweise, wenn durch Scheckeinreichung und Scheckanfrage bei einem anderen Bankinstitut dem betreffenden Mitarbeiter des tätigen Bankinstituts nach Kenntnis über die Identität des Kunden eine ausreichende Sicherheit gegeben erscheint.

Der Ablauf eines Bargeld-Zahlungsvorganges ist in Analogie zu den in Verbindung mit der Ausführungsform nach Fig. 2 beschriebenen Vorgängen folgender:

Der Kunde begibt sich zu dem Kundenschalter, welcher mit dem Arbeitsplatz 8 ausgerüstet ist. Dort gibt der Mitarbeiter des Geldinstitutes an der Tastatur 10 beispielsweise den Namen des Kunden, eine Geschäftsnummer und die Einzelheiten des Bargeld-Zahlungsvorganges, insbesondere die Kontonummer des Kunden und den auszuzahlenden Betrag ein. Der Kunde identifiziert sich an der Kundenidentifizierungseinrichtung 9, oder der Geldinstitut-Mitarbeiter tut dies für ihn, gegebenenfalls unter Verwendung eines vorübergehend ausgegebenen Identifizierungsmittels.

Nun erhält der Kunde Anweisung bzw. Erlaubnis, eine ganz entsprechende Eingabe einer Identifikation an der Kundenidentifizierungseinrichtung 2 vorzunehmen, oder der Geldinstitut-Mitarbeiter tut dies wiederum für ihn.

Eine zusätzliche Tastatureingabe an der Tastatur 3 braucht der Kunde nicht vorzunehmen, da die Bargeld-Ausgabevorrichtung 4 abweichend von der herkömmlichen Wirkungsweise des Geldautomaten 1 vorbereitet ist und ausgelöst wird.

Abschließend ist festzustellen, daß bevorzugtermaßen der Vergleich der Ergebnisse der Aufnahme einer kundenspezifischen Information von der ersten Kundenidentifizierungseinrichtung und von der zweiten Kundenidentifizierungseinrichtung nur einmalig durchgeführt wird und nur einmalig die Freigabe der Bargeld-Ausgabevorrichtung auslöst, so daß eine nochmalige Eingabe einer kundenspezifischen Information an dem Ort des Bargeld-Zahlungsvorgangs-Durchführungsplatzes folgenlos bleibt. Allerdings werden zweckmäßig dort, wo sich die Vergleichseinrichtung 30 bzw. 30a bzw. 30b befindet, die jeweilige Informationseingaben zur Kundenidentifizierung während einer bestimmten Zeitdauer gespeichert gehalten, derart, daß dann, wenn mehrere Kunden an mehreren mitarbeiterbesetzten Arbeitsplätzen nach der Art des Arbeitsplatzes 8 bedient werden, diese Kunden in beliebiger Reihenfolge an den Bargeld-Zahlungsvorgangs-Durchführungsplatz treten können und eine Auszahlung erhalten können.

## Patentansprüche

1. System zur Abwicklung des Bargeldverkehrs mit Kunden innerhalb von Geldinstituten, ihren Geschäftsstellen und dergleichen,
mit einer ersten Kundenidentifizierungseinrichtung (2), welche zur Aufnahme kundenspezifischer Informationen ausgebildet ist;
mit einer Eingabestelle (3) zur Kennzeichnung des Kunden und zur Beschreibung eines Bargeld-Zahlungsvorgangs;
mit einer Bargeld-Ausgabevorrichtung (4); und
mit mindestens einer Datenverarbeitungseinrichtung (5, 7, 32) zur Steuerung der Bargeld-Ausgabevorrichtung (4) in Abhängigkeit von durch die erste Kundenidentifizierungseinrichtung (2), durch die Eingabestelle (3, 10) und durch von einer Datenquelle (7, 31) erzeugten bzw. bereitgestellten Eingangssignalen;
**dadurch gekennzeichnet, daß**
am Orte eines mitarbeiterbesetzten Arbeitsplatzes (8) die, oder eine weitere, Eingabestelle (10) zur Kennzeichnung eines Kunden und zur Beschreibung eines Bargeld-Zahlungvorgangs und außerdem eine zweite Kundenidentifizierungseinrichtung (9), welche ebenfalls zur Aufnahme kundenspezifischer Informationen ausgebildet ist, angeordnet sind;
am Orte eines Bargeld-Zahlungsvorgangs-Durchführungsplatzes (1) die erstgenannte Kundenidentifizierungseinrichtung (2) angeordnet ist;
die Ergebnisse der Aufnahme einer kundenspezifischen Information von der ersten Kundenidentifizierungseinrichtung (2) und von der zweiten Kundenidentifizierungseinrichtung (9) einer Vergleichseinrichtung (30, 30a, 30b) zuführbar sind; und
die mindestens eine Datenverarbeitungseinrichtung (5, 7, 32) am Ort des mitarbeiterbesetzten Arbeitsplatzes (8) und/oder am Ort des Bargeld-Zahlungsvorgangs-Durchführungsplatzes (1) und/oder an einem entfernten Ort (7; 31) vorgesehen ist und von einem positiven Vergleichsergebnis der Vergleichseinrichtung (30, 30a, 30b) im Sinne einer Freigabe der Bargeld-Ausgabevorrichtung (4) ihrerseits gesteuert ist.

2. System nach Anspruch 1, **dadurch gekennzeichnet, daß** sich die Vergleichseinrichtung (30b) am Orte der ersten Kundenidentifizierungseinrichtung (2) befindet.

3. System nach Anspruch 1, **dadurch gekennzeichnet, daß** sich die Vergleichseinrichtung (30a) am Orte der zweiten Kundenidentifizierungseinrichtung (9) befindet.

4. System nach Anspruch 1, **dadurch gekennzeichnet, daß** sich die Vergleichseinrichtung (30) am Orte einer entfernt aufgestellten Datenverarbeitungseinrichtung (7) befindet.

5. System nach einem der Ansprüche 1 bis 4, **dadurch gekennzeichnet, daß** die erste Kundenidentifizierungseinrichtung (2), eine erste Eingabestelle (3), die Bargeld-Ausgabevorrichtung (4) und eine erste Datenverarbeitungseinrichtung (5) Bestandteil eines an sich bekannten Bank-Geldautomaten (1) sind.

6. System nach einem der Ansprüche 1 bis 5, **dadurch gekennzeichnet, daß** die Kundenidentifizierungseinrichtungen (2, 9) jeweils auf eine Kennworteingabe bzw. auf eine Fingerprinteingabe bzw. auf die Eingabe einer optisch lesbaren Unterschrift bzw. auf eine Stimmprobeneingabe bzw. auf eine andere biometrisch auswertbare Eingabe ansprechen.

7. System nach Anspruch 6, **dadurch gekennzeichnet, daß** die erste Kundenidentifizierungseinrichtung (2) mit einem Detektor (38) verbunden ist, der auf eine von einer Scheckkarteneingabe unterschiedliche kundenspezifische Informationseingabe anspricht und einen Umschalter (39) betätigt, welcher den von einem Geldautomaten gebildeten Bargeld-Zahlungsvorgangs-Durchführungsplatz (1) von einer Verbindung zu einem Server (7) bzw. zu einem Datennetz (31) auf eine Verbindung zu dem mitarbeiterbesetzten Arbeitsplatz (8) umschaltet bzw. die letztgenannte Verbindung zusätzlich herstellt.

8. System nach Anspruch 1, **dadurch gekennzeichnet,**
- **daß** die Eingabestelle (10) zur Vorbereitung des Bargeld-Zahlungsvorgangs-Durchführungsplatzes (1) für eine Auszahlung ausgebildet ist und ferner am Ort des mitarbeiterbesetzten Arbeitsplatzes (8) ein Informationsträger-Beschriftungsgerät (11) zum Erstellen von kundenzugeordneter Informationsträger angeordnet ist, welche keine einen Bargeld-Auszahlungsvorgang beschreibende Daten enthalten, und
- **daß** am Orte des Bargeld-Zahlungsvorgangs-Durchführungsplatzes (1) die Kundenidentifizierungseinrichtung (2) zum Lesen der vom Informationsträger-Beschriftungsgerät (11) erstellten Informationsträger ausgebildet ist und diese Informationsträger dort nach Erkennung und Ablesung zurückhaltbar und/oder löschbar sind.

9. System nach Anspruch 8, **dadurch gekennzeichnet, daß** eine erste Kundenidentifizierungseinrichtung (2), eine erste Eingabestelle (3), die Bargeld-Ausgabevorrichtung (4) und eine erste Datenverarbeitungseinrichtung (5) Bestandteil eines an sich bekannten Bank-Geldautomaten (1) sind.

10. System nach Anspruch 8 oder 9, **dadurch gekennzeichnet, daß** sich am Ort des mitarbeiterbesetzten Arbeitsplatzes (8) als gesonderte Kundenidentifizierungseinrichtung (9) eine Kennworteingabevorrichtung oder ein Fingerprintabtaster oder ein Unterschriftscanner oder ein Stimmanalysator oder eine nach anderen biometrischen Verfahren arbeitende Einrichtung befindet.

11. System nach einem der Ansprüche 8 bis 10, **dadurch gekennzeichnet, daß** der Ort des mitarbeiterbesetzten Arbeitsplatzes (8) und der Ort des Bargeld-Zahlungsvorgangs-Durchführungsplatzes (1) über Datenleitungen (6, 7, 13) verbunden sind, über welche Ergebnissignale entsprechend dem Vergleich bestimmter der genannten Eingangssignale, ferner Quittungssignale zur Bestätigung von Betriebszuständen der Kundenidentifzierungseinrichtung bzw. -einrichtungen (2; 9) und der Bargeld-Ausgabevorrichtung (4), sowie Zeitsteuersignale, insbesondere Zeitfenstersignale zur Vorgabe von Zeitgrenzen für die Durchführung von Abwicklungszeiträumen des betreffenden Geschäftsvorganges, übertragbar sind.

12. System nach Anspruch 9, **dadurch gekennzeichnet, daß** die Kundenidentifizierungseinrichtung (2) des Bank-Geldautomaten (1) so ausgebildet ist, daß sie vom Informationsträger-Beschriftungsgerät (11) des mitarbeiterbesetzten Arbeitsplatzes (8) beschriftete Informationsträger aufgrund einer besonderen Kennzeichnung derselben nach ihrer Auswertung löscht (14) und/oder einbehält.

13. Verfahren zur Abwicklung eines Bargeld-Zahlungsvorganges unter Verwendung einer innerhalb von Geldinstituten, ihren Geschäftsstellen und dergleichen aufgestellten Auszahlungseinrichtung, welche eine Kundenidentifizierungseinrichtung zur Aufnahme kundenspezifischer Informationen, eine Eingabestelle zur Kennzeichnung des Kunden und zur Beschreibung eines Bargeld-Zahlungsvorganges, eine Bargeld-Ausgabevorrichtung, und eine Verbindung zu einer Datenverarbeitungseinrichtung zur Steuerung der Bargeld-Ausgabevorrichtung in Abhängigkeit von Eingangssignalen enthält, die durch die Kundenidentifizierungseinrichtung, durch die Eingabestelle und durch eine Datenquelle erzeugt bzw. bereitgestellt werden, insbesondere unter Verwendung eines Geldautomaten,
**dadurch gekennzeichnet,**
- **daß** am Ort eines mitarbeiterbesetzten Arbeitsplatzes, der mit einer Eingabestelle ausgestattet ist, Daten entsprechend einem Kundenkonto, einem auszuzahlenden Betrag und, gesondert hiervon, kundenidentifizierende Daten eingegeben werden,
- **daß** in der oder einer Datenverarbeitungseinrichtung, die am Ort des mitarbeiterbesetzten Arbeitsplatzes und/oder am Ort des Bargeld-Zahlungsvorgangs-Durchführungsplatzes und/oder an einem entfernten Ort vorgesehen ist, eine Prüfung der kundenidentifizierenden Daten und, anhand einer Umsatzdatei, der Daten über den auszuzahlenden Betrag erfolgt,
- **daß** das Prüfungsergebnis und die Daten entsprechend dem auszuzahlenden Betrag an die Auszahlungseinrichtung übertragen werden,
- **daß** in der Auszahlungseinrichtung an deren Eingabestelle wiederum die kundenidentifizierenden Daten eingegeben werden,
- **daß** die Übereinstimmung letzterer Daten mit dem am mitarbeiterbesetzten Arbeitsplatz eingegebenen kundenidentifizierenden Daten überprüft und bei positivem Überprüfungsergebnis die Auszahlung ausgelöst wird, und
- **daß** in der bzw. einer Datenverarbeitungseinrichtung die Buchhaltung vorgenommen wird (3).

14. Verfahren nach Anspruch 13, **dadurch gekennzeichnet, daß** die an der Auszahlungseinrichtung eingegebenen kundenidentifizierenden Daten zu der Datenverarbeitungseinrichtung übertragen und dort mit den am mitarbeiterbesetzten Arbeitsplatz eingegebenen kundenidentifizierenden Daten verglichen werden, und daß bei positivem Vergleichsergebnis von der Datenverarbeitungseinrichtung aus die Auszahlung an der Auszahlungseinrichtung gesteuert wird.

## Claims

1. A system for carrying out cash transactions with customers within financial institutions, their branches and the like,
having a first customer identification device (2) which is designed to record customer-specific information;
having an input point (3) for identifying the customer and for describing a cash-issuing transaction;
having a cash-issuing device (4); and
having at least one data processing device (5, 7, 32) for controlling the cash-issuing device (4) as a function of input signals which are generated or prepared by the first customer identification device (2), by the input point (3, 10) and by a data source (7, 31);
**characterized in that**
the input point (10) or a further input point (10), for identifying a customer and for describing a cash-issuing transaction and in addition a second customer identification device (9), which is also designed to record customer-specific information, are arranged at the location of a workstation (8) which is occupied by an employee;
the aforesaid customer identification device (2) is arranged at the location of a processing station (1) for the cash-issuing transaction;
the results of the recording of a customer-specific piece of information by the first customer identification device (2) and by the second customer identification device (9) can be supplied to a comparator device (30, 30a, 30b); and
the at least one data processing device (5, 7, 32) is provided at the location of the workstation (8) which is occupied by an employee and/or at the location of the point (1) at which the cash-issuing transaction is executed and/or at a remote location (7; 31), and is controlled itself by a positive comparison result of the comparator device (30, 30a, 30b) in terms of enabling of the cash-issuing device (4).

2. The system as claimed in claim 1, **characterized in that** the comparator device (30b) is situated at the location of the first customer identification device (2).

3. The system as claimed in claim 1, **characterized in that** the comparator device (30a) is situated at the location of the second customer identification device (9).

4. The system as claimed in claim 1, **characterized in that** the comparator device (30) is situated at the location of a remotely installed data processing device (7).

5. The system as claimed in one of claims 1 to 4, **characterized in that** the first customer identification device (2), a first input point (3), the cash-issuing device (4) and a first data processing device (5) are components of an ATM (1) which is known per se.

6. The system as claimed in one of claims 1 to 5, **characterized in that** the customer identification devices (2, 9) each respond to a password input, a fingerprint input, the inputting of an optically readable signature, a voice test input or to some other input which can be evaluated biometrically.

7. The system as claimed in claim 6, **characterized in that** the first customer identification device (2) is connected to a detector (38) which responds to a customer-specific information input which is different from a check card input, and activates a switch (39) which switches over the point (1) at which cash-issuing transactions are executed, formed by an ATM, from a connection to a server (7) or to a data network (31) to a connection to the workstation (8) which is occupied by an employee, and/or additionally sets up said connection.

8. The system as claimed claim 1, **characterized**
- **in that** the input point (10) for preparing the point (1) at which cash-issuing transactions are executed is designed for paying out and, in addition, an information-carrier-writing apparatus (11) for producing customer-assigned information carriers is located at the location of the workstation (8) which is occupied by an employee, none of said information carriers containing data describing a cash-issuing transaction, and
- **in that** the customer identification device (2) at the location of the point (1) at which cash-issuing transactions are executed is designed to read the information carriers produced by the information-carrier-writing apparatus (11), and these information carriers can be retained there and/or deleted after being detected and read.

9. The system as claimed in claim 8, **characterized in that** a first customer identification device (2), a first input point (3), the cash-issuing device (4) and a first data processing device (5) are components of an ATM (1) which is known per se.

10. The system as claimed in claim 8 or 9, **characterized in that** a password-inputting device or a fingerprint sensor or a signature scanner or a voice analyzer or a device which operates according to other biometric methods is situated at the location of the workstation (8) occupied by an employee as a specific customer identification device (9).

11. The system as claimed in one of claims 8 to 10, **characterized in that** the location of the workstation (8) which is occupied by an employee and the location of the point (1) at which cash-issuing transactions are carried out are connected via data lines (6, 7, 13) via which result signals corresponding to the comparison between certain of the aforesaid input signals, and additionally acknowledgement signals for confirming operating states of the customer identification device or devices (2; 9) and the cash-issuing device (4), and timing control signals, in particular time window signals for specifying time limits for the execution of processing time periods of the respective business transaction, can be transmitted.

12. The system as claimed in claim 9, **characterized in that** the customer identification device (2) of the ATM (1) is designed such that it deletes (14) and/or retains information carriers which are labelled by the information-carrier-writing apparatus (11) of the workstation (8) which is occupied by an employee, on the basis of a particular identification of the same after their evaluation.

13. A method for processing a cash-issuing transaction using a payment device which is installed within financial institutions, their branches and the like and which contains a customer identification device for recording customer-specific information, an input point for identifying the customer and for describing a cash-issuing transaction, a cash-issuing device and a connection to a data processing device for controlling the cash-issuing device as a function of input signals which are generated or prepared by the customer identification device, by the input point and by a data source, in particular using an ATM,
**characterized**
- **in that** data corresponding to a customer account, to an amount which is to be paid out and, independently thereof, customer-identifying data, are input at the location of a workstation which is occupied by an employee and which is equipped with an input point,
- **in that** the customer-identifying data are tested and the data relating to the amount which is to be paid out are tested by means of a transactions record file, in the or in a data processing device which is provided at the location of the workstation occupied by an employee and/or at the location of the point at which cash-issuing transactions are executed and/or at a remote location,
- **in that** the test result and the data corresponding to the amount which is to be paid out are transmitted to the cash-issuing device,
- **in that**, in turn, the customer-identifying data are input into the cash-issuing device, at its input point,
- **in that** the correspondence between the latter data and the customer-identifying data which are input at the workstation which is occupied by an employee is checked, and given a positive check result, the payment is initiated, and
- **in that** account records are processed (3) in the or a data processing device.

14. The method as claimed in claim 13, **characterized in that** the customer-identifying data which are input at the cash-issuing device are transmitted to the data processing device and compared there with the customer-identifying data which are input at the workstation which is occupied by an employee, and **in that** in the case of a positive result, the payment at the cash-issuing device is controlled from the data processing device.

## Revendications

1. Système pour le déroulement de la transaction en espèces avec des clients dans des instituts bancaires, leurs succursales et analogues, comportant
un premier dispositif (2) d'identification des clients, qui est conçu pour enregistrer des informations spécifiques aux clients;
un poste d'entrée (3) pour caractériser le client et décrire une opération de paiement d' espèces;
un dispositif (4) de délivrance d'espèces; et
au moins un dispositif de traitement de données (5, 7, 32) pour commander le dispositif (4) de délivrance d'espèces en fonction de signaux d'entrée produits ou fournis par le premier dispositif (2) d'identification des clients, par le point d'entrée (3, 10) et par une source de données (7, 31) ;
**caractérisé en ce que**
sur le lieu d'un poste de travail (8) occupé par un collaborateur, sont disposés le ou un autre point d'entrée (10) pour caractériser un client et pour décrire un processus de comptage d'espèces et en outre un second dispositif (2) d'identification des clients, qui est également formé de manière à enregistrer des informations spécifiques aux clients;
le dispositif (2) d'identification des clients, indiqué en premier lieu, est disposé sur le lieu de l'emplacement (1) d'exécution d'un processus de paiement d'espèces;
le résultat de la réception d'une information spécifique au client par le premier dispositif (9) d'identification des clients et par le second dispositif (9) d'identification des clients peuvent être envoyés à un dispositif de comparaison (30, 30a, 30b); et
le au moins un dispositif de traitement de données (5, 7, 32) est prévu sur le lieu du poste de travail (8) occupé par un collaborateur et/ou sur le lieu de l'emplaceme (1) d'exécution du processus de paiement d'espèces et/ou en un lieu éloigné (7; 31) et est commandé pour sa part par un résultat positif de comparaison du dispositif de comparaison (30, 30a, 30b) dans le sens d'une libération du dispositif (4) de délivrance d'espèces.

2. Système selon la revendication 1, **caractérisé en ce que** le dispositif de comparaison (30b) est situé sur le lieu du premier dispositif (2) d'identification des clients.

3. Système selon la revendication 1, **caractérisé en ce que** le dispositif de comparaison (30a) est situé sur le lieu du second dispositif (9) d'identification des clients.

4. Système selon la revendication 1, **caractérisé en ce que** le dispositif de comparaison (30) est situé sur le lieu d'un dispositif de traitement de données (7) installé dans une position éloignée.

5. Système selon l'une des revendications 1 à 4, **caractérisé en ce que** le premier dispositif (2) d'identification des clients, un premier point d'entrée (3), le dispositif (4) de délivrance d'espèces et un premier dispositif de traitement de données (5) font partie d'un distributeur automatique bancaire connu d'espèces.

6. Système selon l'une des revendications 1 à 5, **caractérisé en ce que** les dispositifs (2, 9) d'identification des clients répondent respectivement à une entrée de mot de passe ou à une entrée d'empreinte digitale ou à l'entrée d'une signature lisible par voie optique ou à une entrée d'un échantillon vocal d'accord ou à une autre entrée pouvant être évaluée d'une manière biométrique.

7. Système selon la revendication 6, **caractérisé en ce que** le premier dispositif (2) d'identification des clients est relié à un détecteur (38), qui répond à une introduction d'information spécifique au client, qui diffère d'une entrée d'une carte bancaire et actionne un commutateur (39) qui commute l'emplaceme (1) d'exécution du processus de paiement d'espèces, formé par un distributeur automatique d'argent, depuis une liaison avec un serveur (7) ou avec un réseau de données (31) à une liaison avec le poste de travail (8) occupé par un collaborateur ou établit en supplément la liaison indiquée en dernier lieu.

8. Système selon la revendication 1, **caractérisé en ce**
- **que** le point d'entrée (10) pour la préparation de l'emplacement (1) d'exécution du processus de paiement d'espèces est conçu pour un paiement et qu'en outre sur le lieu du poste de travail (8) occupé par un collaborateur est disposé un appareil (11) d'inscription sur un support d'informations, qui sert à établir un support d'informations associé au client et ne contient aucune donnée décrivant un processus de paiement d'espèces et
- **que** sur le lieu de l'emplacement (1) d'exécution du processus de paiement d'espèces, le dispositif (2) d'identification des clients est agencé de manière à lire les supports d'informations établis par l'appareil (11) d'inscription sur les supports d'informations et que ces supports d'informations peuvent être retenus et/ou peuvent être effacés, à cet endroit, après identification et lecture.

9. Système selon la revendication 8, **caractérisé en ce qu'**un premier dispositif (2) d'identification des clients, un premier point d'entrée (3), le dispositif (4) de délivrance d'espèces et un premier dispositif de traitement de données (5) font partie d'un distributeur automatique connu bancaire d'argent (1).

10. Système selon la revendication 8 ou 9, **caractérisé en ce que** sur le lieu du poste de travail (8) occupé par un collaborateur est disposé, en tant que dispositif particulier (9) d'identification des clients, un dispositif d'entrée de mot caractéristique ou un dispositif d'exploration d'empreintes digitales ou un scanner d'exploration de signature ou un analyseur d'accord vocal ou un dispositif travaillant selon un autre procédé biométrique.

11. Système selon l'une des revendications 8 à 10, **caractérisé en ce que** le lieu du poste de travail (8), occupé par un collaborateur, et le lieu de l'emplacement (1) d'exécution du processus de paiement d'espèces sont reliés par l'intermédiaire de lignes de transmission de données (6, 7, 13) au moyen desquelles peuvent être transmis des signaux de résultat conformément à la comparaison de certains des signaux d'entrée indiqués, et en outre des signaux d'accusé de réception pour la confirmation d'états de fonctionnement du ou des dispositifs (2; 9) d'identification des clients et/ou du dispositif (4) de délivrance d'espèces, ainsi que des signaux de commande temporelle, notamment des signaux de fenêtres temporelles servant à prédéterminer des limites temporelles pour l'exécution de cycles de déroulement de l'opération commerciale considérée.

12. Système selon la revendication 9, **caractérisé en ce que** le dispositif (2) d'identification des clients du distributeur automatique d'argent de banque (1) est agencé de telle sorte qu'il efface (14) et/ou conserve des supports d'information, marqués d'inscriptions par l'appareil (11) d'inscription sur les supports d'information du poste de travail (8) occupé par un collaborateur, sur la base d'une caractérisation particulière de ces supports d'information, et ce après leur évaluation.

13. Procédé d'exécution d'une opération de paiement d'espèces moyennant l'utilisation d'un dispositif de paiement installé à l'intérieur d'instituts bancaires, de leurs succursales et analogues et qui contient un dispositif d'identification des clients servant à enregistrer des informations spécifiques aux clients, un poste d'entrée pour caractériser le client et pour inscrire une opération de paiement d'espèces, un dispositif de délivrance d'espèces et une liaison avec un dispositif de traitement de données pour la commande du dispositif de délivrance d'espèces, en fonction de signaux d'entrée, qui sont produits ou fournis par le dispositif d'identification des clients, par le point d'entrée et par une source de données, notamment moyennant l'utilisation d'un distributeur automatique d'argent,
**caractérisé en ce**
- **que** des données sont introduites conformément à un compte du client, à une valeur devant être payée et, séparément de cela, des données d'identification du client sont introduites, sur le lieu d'un poste de travail occupé par un collaborateur et qui est équipé d'un point d'entrée,
- un contrôle des données d'identification des clients et, sur la base d'un fichier de transfert, des données concernant la valeur devant être payée est exécuté dans le ou un dispositif de traitement de données, qui est prévu sur le lieu du poste de travail occupé par le collaborateur et/ou sur le lieu de l'emplacement d'exécution du processus de paiement d'espèces et/ou en un lieu éloigné,
- **que** le résultat du contrôle et les données sont transmis conformément à la valeur devant être payée, au dispositif de paiement,
- **que** les données identifiant le client sont à nouveau introduites dans le dispositif de paiement, au niveau du point d'entrée de ce dispositif,
- **que** la concordance des dernières données avec les données identifiant le client, qui sont introduites au niveau du poste de travail occupé par le collaborateur, sont contrôlées et le paiement est déclenché par le résultat positif du contrôle, et
- **que** la comptabilité est exécutée (3) dans le ou un dispositif de traitement de données.

14. Procédé selon la revendication 13, **caractérisé en ce que** les données identifiant le client, introduites dans le dispositif de paiement, sont transmises au dispositif de traitement de données et sont comparées aux données identifiant le client, qui sont introduites à l'emplacement de travail occupé par un collaborateur, et que dans le cas d'un résultat positif de la comparaison, le paiement au niveau du dispositif de paiement est commandé à partir du dispositif de traitement de données.
